**Europäisches Patentamt**

**European Patent Office**

**Office européen des brevets**

(11) Veröffentlichungsnummer: **0 128 379**
**A1**

# EUROPÄISCHE PATENTANMELDUNG

(21) Anmeldenummer: **84105405.9**

(22) Anmeldetag: **12.05.84**

(51) Int. Cl.³: **B 29 F 1/10**

(30) Priorität: **13.05.83 DE 3317362**

(43) Veröffentlichungstag der Anmeldung: **19.12.84**
Patentblatt 84/51

(84) Benannte Vertragsstaaten: **BE DE FR IT**

(71) Anmelder: **Kontec GmbH Konstuktion + Technik im Maschinenbau, Albert Hauelsnestasse 3, D-6710 Frankenthal (DE)**

(72) Erfinder: **Fabian, Jiri, Falterweg 4, D-6711 Gerolsheim (DE)**

(74) Vertreter: **Fritsch, Klaus, Dipl.-Ing., Richard Wagner Strasse 1a, D-6701 Hochdorf-Assenheim 2 (DE)**

(54) **Geschlossene Form zum Umspritzen der Randkanten eines plattenartigen flächigen Bauteils.**

(57) Eine aus zwei Formhälften (11, 12) gebildete Form zum Umspritzen der Ranskanten eines plattenartigen, flächigen Bauteils (17), mit flüssigem, aushärtbarem Kunststoff, vorzugsweise Polyurethan, besitzt an den Innenseiten jeder Formhälfte (11, 12) je eine umlaufende Lippe (15, 16), die in zusammengefahrenem, spritzbereitem Zustand der Formhälften beidseitig auf den ebenen Oberflächen des Bauteils (17) federnd angedrückt sind und so das Bauteil am Rand zwischen sich nehmen.

- 7 -

Kontec  GmbH

6710 Frankenthal

1 1. MAI 1984

Geschlossene Form zum Umspritzen der Randkanten eines plattenartigen, flächigen Bauteiles.

Die Erfindung betrifft eine geschlossene Form gemäß dem Oberbegriff des Anspruches 1.

Flächige Bauteile, wie beispielsweise Tischplatten, Türplatten und dergl. , benötigen schon aus ästhetischen Gründen einen Schutz der freien Randkanten, insbesondere dann, wenn diese Platten aus Preßspanmaterial hergestellt sind. Üblicherweise werden Umleimer verwendet, die an den Randkanten beispielsweise festgeklebt werden.

Derartige Umleimer haben jedoch den Nachteil, daß sie bei entsprechender, stoßartiger Belastung der Randkanten früher oder später abplatzen.

Es ist auch wichtig, die Kanten der plattenartigen Bauteile mit einer Umrandung zu umgeben, die                        die Kanten schützt und darüber hinaus zur Verringerung der Verletzungsgefahr an derartigen Kanten beiträgt. Derartige Umrandungen werden teils in offenen,

-2-

-2-

teils in geschlossenen Formen hergestellt. Offene Formen sind allgemein üblich; geschlossene Formen sind erst in der letzten Zeit bekannt geworden.

Eine derartige geschlossene Form ist zum Beispiel aus der DE-OS 29 37 605 bekannt geworden. Diese Form ist aus zwei Formhälften gebildet worden, zwischen denen ein Dichtungselement angeordnet ist, das gleichzeitig auch den Raum mit begrenzt, in den der Kunststoff zur Herstellung der Umrandung eingespritzt bzw.eingefüllt wird.

Aus der weiterhin bekannten DE-OS 30 20 906 sind geschlossene Formen bekannt geworden, bei denen die Dichtungen im Bereich der Plattenkanten vorgesehen sind.

An den fertiggestellten Umrandungen ist gut zu sehen, an welchen Stellen Dichtungen aus Silikon oder dergleichen vorgesehen sind. Die Dichtungen nämlich bewirken insbesondere bei der Verwendung von Polyurethan eine Aufrauhung der Außenfläche der Umrandung ; darüber hinaus ist es im wesentlichen nicht möglich, Kantenübergänge zwischen der aus Metall bestehenden Form und den Dichtungen absolut glatt herzustellen. Aufgrund der Verformung der Dichtungsmasse werden sich immer Absätze an der Form bilden. Man kann natürlich dafür sorgen, daß derartige Absätze dort liegen, wo sie dem Blick verborgen sind, beispielsweise auf der Unterfläche einer Tischplatte. Wenn aber Türen mit solchen Umrandungen umgeben werden, dann sollte man aus ästhetischen Gründen dafür sorgen, daß die Umrandungen von allen Seiten glatt und ohne Absätze ausgebildet sind.

Aufgabe der Erfindung ist es, eine geschlossene Form der eingangs genannten Art zu schaffen, bei der diese Forderungen verwirklicht sind.

Diese Aufgabe wird erfindungsgemäß gelöst durch eine geschlossene Form der eingangs genannten Art, bei der die kennzeichnenden Merkmale des Anspruches 1 verwirklicht sind.

-3-

-3-

Zweckmäßigerweise ist an der Berührungsfläche der beiden Formhälften eine Dichtleiste vorgesehen, die optimaler Weise so gearbeitet sein sollte, daß sie mit der anderen Formhälfte keinen Rand oder zumindest keinen Übergang an der endgültig hergestellten Umrandung bildet. Dies ist im wesentlichen eine Frage der Qualität der Herstellung der Form, prinzipell wird immer ein wenn auch sehr kleiner Absatz vorhanden sein. Man kann -wie gesagt- bei geeigneter Qualität- diese Trennfuge bzw. die Auswirkung der Trennfuge so klein machen, daß die Trennfuge selbst kaum mehr sichtbar ist.

Der Einsatz einer derartigen geschlossenen Form an einer Platte ist wie folgendermaßen vorzunehmen:
die Platte wird mit ihrem Rand zwischen die beiden Lippen eingesetzt und beim Zusammenfahren bzw. Zusammendrücken der Formhälften legen sich die Dichtlippen mit ihren aufeinander zuweisenden Flächen an den Außenflächen des plattenförmigen Bauteils an und bei weiterem Zusammenfahren werden die Dichtlippen geringfügig durch die Form nach außen aufgebogen; mit anderen Worten: sie werden elastisch verformt und bewirken so eine Abdichtung zwischen den Formhälften und dem plattenartigen Bauteil. Bei kreisrunden oder ovalen Formen des plattenartigen Bauteiles sind Probleme nicht zu erwarten. Schwierigkeiten bereiten solche plattenartige Bauteile, die rechteckig oder quadratisch sind und bei denen die Länge zwischen den Eckkanten relativ groß ist. Die Lippen im Bereich der Ecken der Formhälften sind im Vergleich zu dem übrigen Bereich der Lippen, also im Vergleich zu der Elastizität der Lippen zwischen den Ecken, recht starr. Dies hat zur Folge, daß sich die Dichtlippen im mittleren Bereich zwischen den zwei benachbarten Ecken auwölben, wenn das plattenartige Bauteil bearbeitet werden soll. Demgemäß ist es für zweckmäßig erkannt worden, an den Endkanten

-4-

0128379

-4-

der Lippen auf ihre Außenfläche im Bereich zwischen den Ecken Verstärkungsleisten anzubringen, die eine elastische Verformung der Lippe selbst um eine in Längsrichtung der Lippenerstreckung verlaufende Achse gestattet, nicht aber eine Aufwölbung der Lippe quer dazu. Dabei kann die Verstärkungsleiste gestuft sein, so daß im Bereich der Ecken die Verstärkungsleiste eine geringe Höhe und damit ein geringes Trägheitsmoment und im mittleren Bereich eine große Höhe und demgemäß auch ein großes Trägheitsmoment gegen Verbiegen aufweist.

Es besteht die Möglichkeit, die Verstärkungsleiste einfach durch einen rechteckigen Querschnitt zu bilden; es besteht auch die Möglichkeit, der Verstärkungsleiste die Form eines T zu verleihen.

Zweckmäßigerweise können noch Federn vorgesehen werden, die zwischen einem senkrecht zur Lippenfläche verlaufenden Anschlag an der Formhälfte und einem Ansatz an dem Lippenende, d.h. insbesondere der Verstärkungsleiste, angeordnet sind; in sinnvoller Weise sind mehrere derartiger Federn vorgesehen, die die Lippen so aufeinander zudrücken, so daß die Federn zum Andrücken der Lippen gegen die Plattenflächen mit beitragen. Die Federn, die in zweckmäßiger Weise als Schraubendruck- oder Tellerfedern ausgebildet sein können, verleihen der Lippe eine Vorspannung, die so gewählt ist, daß die Lippe im entspannten Zustand nach innen gedrückt, also geringfügig nach innen gestülpt, im Betriebszustand aber gerade ist bzw. in einer Ebene liegt.

Zur Führung der Feder kann eine Schraube vorgesehen sein, die mit dem Schraubenkopf zusätzlich als Anschlag für die Leiste dient, so daß die Lippe nicht zu stark vorgespannt wird.

-5-

-5-

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigt:

| | |
|---|---|
| Fig. 1 | eine Schnittansicht durch eine erfindungsgemäße Form, während des Spritzvorgangs, |
| Fig. 2 | eine Aufsicht auf eine Form gemäß Fig. 1, wobei diese Form gegenüber der der Fig. 1 modifiziert ist, |
| Fig. 3 | eine Schnittansicht gemäß der Linie III-III der Fig. 2, |
| Fig. 4 | eine Schnittansicht ähnlich der der Fig. 3, ohne Verstärkungsleiste, |
| Fig. 5 | eine Schnittansicht gemäß der Linie V-V, |
| Fig. 6 und 7 | eine Schnittansicht einer weiteren Ausgestaltung der Erfindung, in Betriebsstellung und in entspannter Stellung. |

-6-

-6-

Eine erfindungsgemäße Form , die aus Metall hergestellt ist, wird aus zwei Formhälften gebildet, einer oberen Formhälfte 11 und einer unteren Formhälfte 12. Beide Formhälften besitzen in ihrem Berührungsbereich je eine Dichtleiste 13 und 14; von diesen Dichtleisten kann lediglich auch nur eine vorhanden sein und die andere wegfallen.

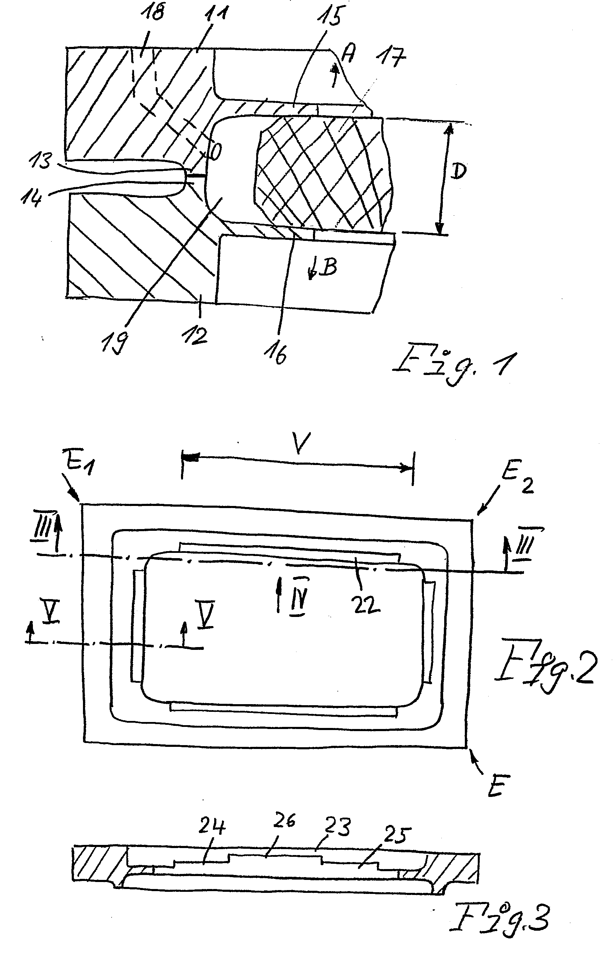

An der Innenfläche jeder Formhälfte ist je eine Lippe 15 und 16 vorgesehen, die im Vergleich zu dem übrigen Bereich jeder Formhälfte 11 und 12 dünn ausgebildet ist , so daß sie sich elastisch verformen kann. Zu diesem Zweck ist im geschlossenen Zustand , der in der Fig. 1 gezeigt ist, der Abstand D der Lippen 15 und 16 voneinander geringfügig kleiner als die durch die Toleranzen bewirkte Mindestdicke einer zu umspritzenden Platte 17, die als Tischplatte oder dergleichen ausgebildet sein kann. Mittels einer Zuführungsleitung 18 wird in den durch die beiden Formhälften und die Platte 17 begrenzten Raum 19 Polyurethan eingespritzt, der in diesem Raum 19 aushärtet , wodurch die Umrandung gebildet wird. Aufgrund der elastischen Verformung wird die Innenfläche der Lippe 15 bzw. 16 federnd gegen die benachbarte Außenfläche der Platte gedrückt, so daß im Endeffekt die beiden Lippen in Pfeilrichtung A und B nach außen aufgewölbt bzw. aufgestülpt werden. Dies bewirkt eine optimale Abdichtung, so daß aus dem Raum 19 Polyurethan nicht auf die Oberflächen der Platten austreten kann. Unter gewissen Voraussetzungen ist die Abdichtung zwischen den Lippen 15 und 16 und dem plattenartigen Bauteil 7 eine Linienabdichtung , die dadurch zumindest geringfügig zu einer flächigen Abdichtung wird, als die Platte 17 elastisch verformbar ist.

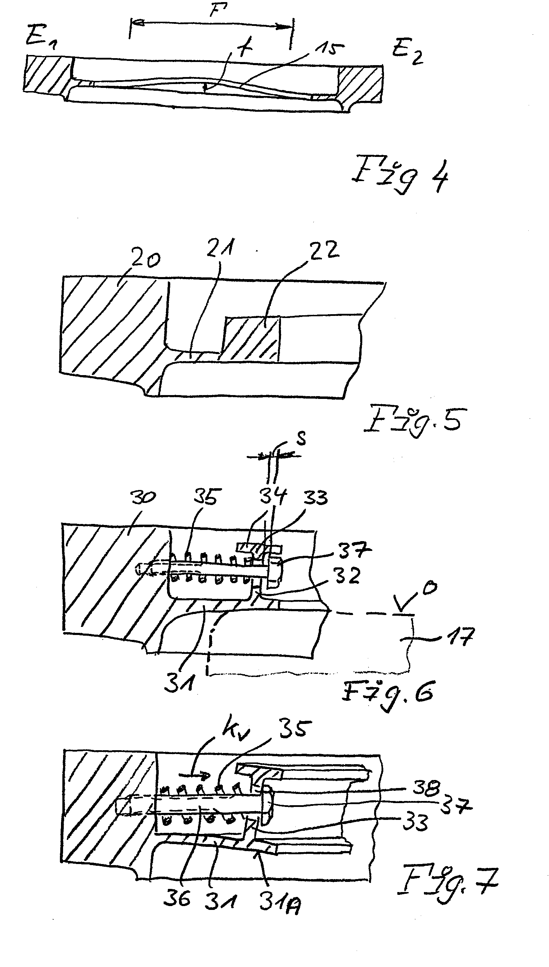

Es sei nun bezug genommen auf die Fig. 2 und 4. Bei runden Bauteilen bildet die elastische Verformung der Lippen 15 und 16 im Betriebszustand kaum ein Problem, da die Belastung und auch die Federsteifigkeit der Lippen am Umfang einer kreisbogenartigen oder

-7-

ovalen Form überall annähernd konstant ist. Wenn eine rechteckige Form verwendet wird, dann wird die Lippe 15 bzw. 16 im Bereich der Ecke $E_1$ aufgrund des Eckeneinflußbereiches eine deutlich höhere Federsteifigkeit besitzen als im mittleren Bereich zwischen zwei Ecken $E_1$ bzw. $E_2$. Demgemäß wird eine Verformung im Bereich der Ecken $E_1$ bzw. $E_2$ bei ensprechender Steifigkeit des plattenartigen Bauteils 17 zu einer größeren Verformung der Lippe im Bereich der Ebene führen als im mittleren Bereich. Dies hat aber zur Folge, daß aufgrund der Federsteifigkeit der Lippe im Bereich der Ecken $E_1$ und $E_2$ sich die Lippe im mittleren Bereich nach außen auszustülpen beginnt, was in der Fig. 4 mit dem Pfeil und dem kleinen Buchstaben f angedeutet wird. Man kann davon ausgehen, daß in dem Bereich F, der von der linken Ecke $E_1$ in einem bestimmten Abstand beginnt und in einem gleichen Abstand von der rechten Ecke $E_2$ endet, eine Abdichtung zwischen der Lippe 15 und dem flächigen Bauteil 17 nicht mehr 100% gewährleistet ist. Demgemäß werden Verstärkungsrippen vorgesehen, deren grundsätzliche Form aus Fig. 5 ersichtlich ist. Man erkennt die obere Formhälfte 20, an der eine Lippe 21 angeformt ist, die an ihrem freien Ende mit einer Verstärkungsleiste 22 versehen ist. Aus den Fig. 2 und 3 ist die Lage und die Form der Verstärkungsrippen näher bezeichnet. Man erkennt, daß die Verstärkungsleisten oder Rippen zwischen den beiden Ecken $E_1$ und $E_2$ über einen Bereich V verlaufen, der gleich oder größer sein muß als der Bereich F. Dadurch wird der Versteifungseinfluß der Ecken zwar nicht abgebaut, eine Ausbiegung der Lippen 15 oder Aufstülpung der Lippen 15 in Pfeilrichtung f aber im wesentlichen verhindert. Wenn man anstatt einer Leiste 22 eine Leiste 23 bildet, die einen Bereich 24 bzw. 25 nahe den Ecken niedriger Höhe und im mittleren Bereich einen Bereich größerer Höhe 26 bildet, dann kann der Steifigkeitseinfluß im Bereich der Ecken $E_1$ und $E_2$ verringert werden. Bei geeigneter

0128379

-8-

Bemessung der Leisten ist die Aufwölbung f gleich Null.

Die Leisten, die zur Verstärkung der Lippen dienen, können auch, wie in den Fig. 6 und 7 dargestellt, T-förmig sein. Die Fig. 6 zeigt eine obere Formhälfte 30, an der eine Lippe 31 angeformt ist, deren freies Ende eine nach oben hin vorstehende bzw. angeformte T-förmige Verstärkungsleiste 32 aufweist, mit einem senkrecht zu der Lippe 31 verlaufenden Steg 33 und einem quer dazu verlaufenden Balken 34. An mehreren Stellen der Verstärkungsleiste 32 sind Druckfedern 35 angeordnet, die der Lippe 31 eine Vorspannkraft $K_v$ erteilen, dergestalt, daß im entspannten Zustand die Lippe 31 an ihrem Ende nach unten gedrückt wird. Die Führung der Feder 35, die in der Fig. 6 bzw. 7 als Schraubendruckfeder angedeutet ist und wegen einer starken Progressivität günstigerweiser als Tellerfeder ausgebildet sein sollte, wird mittels eines in die Formhälfte 30 eingeschraubten Schraubenbolzens 36 geführt, dessen Schraubenkopf 37 außerhalb des Steges 33 liegt ; er ist so tief in die Form 30 eingeschraubt, daß der Schraubenkopf 37 als Anschlag für den Steg 33 dient, so daß die Lippe nicht zu stark im entspannten Zustand verformt wird. Wenn die Form in Betrieb genommen wird, dann legt sich die Innenfläche 31 A an der Oberfläche O des plattenartigen Bauteiles 17 an und wird nach oben, also in Pfeilrichtung G verbogen, so daß die Vorspannung aufgehoben ist und zwischen der Innenfläche des Schraubenkopfes 37 und der benachbarten Fläche des Steges 33 ein Spiel S erreicht wird. Dieses Spiel ist zwangsläufig in der Fig. 6 übertrieben dargestellt, ebenso die Verformung der Lippe in der Fig. 7. Anstatt einer T-form kann auch lediglich nur eine Verstärkungsleiste in Form eines Steges 33 vorgesehen werden, an der in den Bereichen, in denen die Federn vorgesehen sind, nach innen verlaufende Nasen zur Führung der Federn angeformt sind.

Die Öffnung 38 im Steg 33, durch die der Schraubenschaft 36 hindurchgreift, muß natürlich den Verformungen der Lippe 31 ange-

-9-

-9-

paßt sein.

Durch die erfindungsgemäße Ausgestaltung wird also eine geschlossene Form geschaffen, bei der elastische Dichtungen aus Kunststoffmaterial nicht mehr verwendet zu werden brauchen, so daß irgend welche Absätze im Bereich der Umrandung vermieden werden können. Daß natürlich noch eine Trennfuge sichtbar wird, die durch die beiden Dichtleisten 13 und 14 gebildet wird, ist selbstverständlich; diese Trennfuge kann aber durch optimale Herstellung und durch genaue Einhaltung von Bearbeitungstoleranzen bei der Herstellung der Form so klein gehalten werden, daß ein Absatz praktisch nicht sichbar wird.

In den obigen Ausführungen ist angedeutet worden, daß eine Verstärkungsleiste zwischen den Ecken und zusätzlich Federn vorgesehen werden können. Es besteht natürlich auch die Möglichkeit, die Verstärkungsleisten lediglich als Stege auszubilden und den Andruck der Lippen 31 an die Oberfläche O des plattenartigen Bauteils 17 durch die Federkraft zu gewährleisten. Zu diesem Zwecke würde dann lediglich ein S stegartiger Ansatz ausreichen, der dem stegartigen Ansatz 33 entsprechen würde. Natürlich kann die Form auch eine Vorspannung nur dann haben, wenn eine Feder nicht vorgesehen ist. Wie erwähnt, besteht auch die Möglichkeit, eine Verstärkungsleiste mit einer Vorspannung mittels einer Feder zu kombinieren.

Verwendet man keine Feder, so besteht außerdem auch die Möglichkeit, die Leiste 22 zusammen mit dem Körper der Formhälfte 20 mittels hydraulischer Andruckmittel gegen die Oberflächen der Bauteile anzudrücken. Dann wäre aber auch genau genommen eine Verstärkungsleiste nicht erforderlich; dann , wie aus Fig. 4 ersichtlich, würde die Verformung f durch Erzeugen eines Druckes im mittleren Bereich F zu Null gemacht.

Die Lippe kann natürlich auch durch eine umlaufende sickenartige Verformung verstärkt werden. Wichtig ist, daß der Widerstand gegen Aufstülpen der Lippe auf Grund der Eckenversteifung vergrößert wird.

0128379

- 7 -

Ansprüche

1. Geschlossene, aus zwei Formhälften aus Metall gebildete Form zum Umspritzen der Randkanten eines plattenartigen, flächigen Bauteiles, beispielsweise einer Tischplatte aus Preßspanmaterial, mit einem flüssigen, aushärtbaren Kunststoff, beispielsweise Polyurethan, dadurch gekennzeichnet, daß an der inneren, dem Bauteil (17) zugewandten Seite jeder Formhälfte (11, 12) je eine umlaufende Lippe (15, 16; 21, 31) aus dem Material, aus dem jede Formhälfte besteht, angeformt ist, die in zusammengefahrenen, betriebsbereitem Zustand der Formhälften beidseitig auf den sich gegenüberliegenden ebenen Flächen des plattenartigen Bauteils (17) federnd andrücken und so das Bauteil am Rand zwischen sich klemmen und an der Berührungsfläche zwischen Lippen und Bauteil für eine Abdichtung sorgen.

2. Form nach Anspruch 1, dadurch gekennzeichnet, daß an der Berührungsfläche der beiden Formhälften (Trennfuge) an wenigstens einer Formhälfte (11, 12) eine Dichtleiste (13, 14) vorgesehen ist.

3. Form nach einem der vorigen Ansprüche, für rechteckige, plattenartige Bauteile, dadurch gekennzeichnet, daß an den Lippen (21, 31) an ihrer Außenfläche und an ihrem freien Rand im Bereich zwischen den Ecken (E, $E_1$, $E_2$) der Form Verstärkungsleisten (22, 32) angebracht sind, die eine elastische Verformung der Lippe selbst lediglich um eine in der Längserstreckung jeder Lippe verlaufende Achse gestattet.

-2-

-2-

4. Form nach einem der vorigen Ansprüche 1 oder 2, für rechteckige, plattenartige Bauteile, dadurch gekennzeichnet, daß zwischen einem senkrecht zur Außenfläche der Lippe (31) verlaufenden Anschlag an der Formhälfte (30) und einem Ansatz (32) am Lippenende wenigstens eine Druckfeder (35) vorgesehen ist, die die Lippe in Richtung aufeinander zuzudrücken sucht und so ein Andrücken der Lippen gegen die Oberflächen des plattenartigen Bauteiles bewirkt.

5. Form nach Anspruch 4, dadurch gekennzeichnet, daß die Druckfeder (35) mittels eines Schraubenbolzens geführt ist , der durch den Ansatz hindurch in die Formhälfte parallel zur Lippe (31) eingeschraubt ist.

6. Form nach Anspruch 5, dadurch gekennzeichnet, daß der Schraubenbolzen (36) einen Schraubenkopf (37) aufweist, gegen dessen Innenfläche der Ansatz in entspanntem Zustand der Lippe zum Anschlag gelangt.

7. Form nach einem der vorigen Ansprüche, dadurch gekennzeichnet, daß der Ansatz gleichzeitig die Verstärkungsleiste ist.

8. Form nach einem der vorigen Ansprüche, dadurch gekennzeichnet, daß die Verstärkungsleiste (32) ein Profil im Querschnitt aufweist, vorzugsweise T-oder L-förmig ausgebildet ist.

9. Form nach einem der vorigen Ansprüche, dadurch gekennzeichnet, daß die Lippe eine rahmenartige Anformung an der Innenseite jeder Formhälfte ist, und daß sie im Querschnitt von der Formhälfte in Richtung der Ebene der Formhälfte vorspringt und so in der Ebene der Oberfläche oder geringfügig daneben verläuft.

0128379

Fig. 1

Fig. 2

Fig. 3

0128379

$E_1$ $E_2$

F*ig* 4

20  21  22

F*ig*.5

S

30  35  34  33

37

32

31  17

F*ig*.6

$k_v$  35

38 37

33

36 31 31A

F*ig*.7

0128379

EUROPÄISCHER RECHERCHENBERICHT

Europäisches Patentamt

Nummer der Anmeldung

| EINSCHLÄGIGE DOKUMENTE | | | EP 84105405.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE - A1 - 2 947 621 (WOCO) <br> * Gesamt * <br> -- | 2 | B 29 F 1/10 |
| A | DE - A - 1 961 011 (WYNANTS) <br> * Gesamt * <br> -- | 2 | |
| A,D | DE - A1 - 2 937 605 (OSAKEYHTIÖ) <br> * Gesamt * <br> -- | | |
| A,D | DE - A1 - 3 020 906 (KONTEC) <br> * Gesamt * <br> -- | | |
| A | DE - B2 - 1 913 322 (LUCAS) <br> * Gesamt * <br> -- | | |
| A | DE - B - 1 629 735 (CROUZET) <br> * Gesamt * <br> ---- | | |

RECHERCHIERTE SACHGEBIETE (Int. Cl. 3)

B 29 C
B 29 F

Der vorliegende Recherchenbericht wurde für alle Patentansprüche erstellt.

| Recherchenort | Abschlußdatum der Recherche | Prüfer |
|---|---|---|
| IWIEN | 05-09-1984 | MAYER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82